# EUROPEAN PATENT SPECIFICATION

(11) **EP 1 172 245 B1**
(45) Date of publication and mention of the grant of the patent: **14.07.2004**
(21) Application number: 00900510.9
(22) Date of filing: 14.01.2000
(51) Int. Cl.: B60K 17/10, F16H 41/02

(54) **HYDROSTATIC PROPULSION SYSTEM FOR DUMPERS AND THE LIKE**
HYDROSTATISCHES ANTRIEBSSYSTEM FÜR KIPPERFAHRZEUGE UND DERGLEICHEN
SYSTEME A PROPULSION HYDROSTATIQUE POUR TOMBEREAUX ET AUTRES MACHINES DE CE TYPE

(43) Date of publication of application: 16.01.2002
(73) Proprietor: Multitor, S.A., 01195 Vitoria (ES)
(72) Inventor: RUIZ ARANA, Alfonso, E-48460 Orduna (ES)
(74) Representative: Ungria Lopez, Javier
(86) International application number: PCT/ES2000/000009
(87) International publication number: WO 2001/051303

(56) References cited:
- GB-A- 2 084 702
- US-A- 3 422 917
- US-A- 3 555 968
- US-A- 3 800 901
- US-A- 3 807 249
- US-A- 4 116 294
- US-A- 4 240 515
- US-A- 4 317 331

## Description

As expressed in the title of this specification, the present invention refers to a hydrostatic propulsion system for dumpers and the like, which has significant improvements over those of current propulsion systems for this type of vehicle.

These hydrostatically motor-propelled dumpers may be used for public works, construction, gardening, farm work, cleaning, etc.

The chassis or frame of the vehicle includes a main engine, either gasoline or diesel, and as working equipment it may have a hopper in the front part, or else, a mixer, loading shovel, excavator, or any other functional element that these types of dumpers usually include.

An object of the invention is to achieve that the self-propulsion is carried out hydraulically in order to prevent the breakdowns that normally happen in traditional dumpers where the movement is achieved with mechanical systems.

### BACKGROUND OF THE INVENTION

Nowadays dumpers or loading vehicles, with a rigid or jointed frame, normally include aside from loading elements (digging shovels, loading shovels, mixers, ramming and surfacing mechanisms, etc.), the mechanisms for movement of the vehicle itself, such as the engine, clutch, brakes, gearbox, differential set and transmission, etc.

Each one of these components involves some manufacturing and assembly costs and above all maintenance costs, since taking the operating conditions of these vehicles and the extremely difficult working conditions into account, breakdowns usually occur.

All of these mechanical systems: clutch, gearbox, differential set, etc. break down relatively easily, due to the hard working conditions thereof.

A relevant background of the art according to the preamble of claim 1 is disclosed in document US3422917, regarding a vehicle having an hydraulic power transmission and comprising at least two wheel axes with wheels mounted thereon. An hydraulic motor associated with each of the wheels, two hydraulic pumps adapted to be driven by a heat engine and a distribution selector for selectively connecting the pumps with the motors. The hydraulic pumps being permanently coupled to the heat engine and means whereby the delivery of pressurized fluid by the pumps to the motors is dependent upon the load applied to the axles. Clutch means controlled by the distribution selector disposed between the motors of the axle taking the maximum load and the corresponding vehicle wheels.

Another relevant background of the art can be found in document US3555968, disclosing a hydraulic power transmission for a vehicle, such as is used in the building and civil engineering industries, comprises two sets of receives each supplied by a pump, wherein a speed limiter is disposed in the common return line of the receiver circuit and is piloted, via a shuttle valve, by whichever is the higher of the pump delivery pressures, whereby the receiver set temporarily being supplied on reduced delivery is free to be driven whereas the two receiver sets can, if need be, have their movements braked. This arrangement enables the same pumps which supply the wheel driving motors of the vehicle, to also drive an actuator without the disturbing consequence which has been prevalent hitherto, of one of the receivers sets braking the other.

Document US4317331 discloses a hydraulic circuit for a hydraulically driven vehicle comprising an engine, a variable displacement pump driven by the engine, a hydraulic motor connected with the variable displacement pump and driven thereby, the hydraulic motor having an output shaft connected thereto, a first fixed displacement pump driven by the engine, an inching brake valve connected with the first fixed displacement pump, a control valve connected with the output side of the inching brake valve for controlling the forward and reverse movement of the vehicle and speed thereof, the output side of which is connected with the variable displacement pump, a parking brake coupled with the output shaft of the hydraulic motor, the parking brake being normally applied by a spring and hydraulically released, a pilot operated first brake control valve connected with the parking brake, a manually operated pump connected with the first brake control valve and the inching brake valve, a pilot operated second brake control valve connected with the first brake control valve, a pilot port thereof being connected with the output side of the control valve, and a second fixed displacement pump driven by the engine and connected with the second brake control valve.

Finally, in document US3800901 is disclosed a hydrostatic loader final drive wherein a hydraulic motor transmits power through a quill shaft to reduction gearing coupled to a track driving sprocket wherein means are provided to conveniently disconnect the quill shaft from the reduction gearing or the motor in situations where it is necessary to tow the vehicle with the motor inoperable, and parking and/or emergency brake means are associated with the input side of the reduction gearing to lock same when the motor is inoperable.

### DESCRIPTION OF THE INVENTION

In broad outline, the hydrostatic propulsion system for dumpers and the like that constitutes the object of the invention is defined by some hydraulic motor reduction units that include braking devices, for the progressive control of braking, as well as for parking.

Each one of these motor reduction units is connected to the respective wheel of the front and rear axles of the dumper.

The hydraulic circuit is double and independent for the front and rear wheels. The main engine of the vehicle, normally gasoline or diesel, simultaneously actuates two hydraulic pumps that draw in the hydraulic oil from a tank, sending the flow to the motor reduction units in order to make the wheels turn.

Both pumps are controlled by two pedal servocontrols, sending the hydraulic oil flow towards the motor reduction units, working at a pressure that depends on the requirements of the effort to be applied by the dumper. These servocontrols operate: one for forward motion and the other for reverse motion, depending on whether one pedal or the other is stepped on.

Therefore, there are two independent or shunt circuits, each one of them connected to the respective pump connected in tandem to the main engine in order to send oil to two motor reduction units, with the same pressure and flow to each one of them.

Nonetheless, this circuit has a built-in control system, materialized by some flow regulators arranged in the shunt connection of the hydraulic installation. The purpose thereof is to balance the pressure as well as the oil flow necessary to compensate the greater or lesser effort of each wheel, functioning as the differential set of traditional dumpers.

All the motor reduction units have a built-in hydraulic braking system, once the servocontrol is no longer actuated. This brake operates when the oil pressure drops, the mechanical part actuated by strong springs that achieve rapid but not sudden braking coming into operation.

The parking brake system provides the blocking of the four wheels and actuates in the same manner as the previously described one, but causing the emptying of all the hydraulic oil that remains in the wheels, the mechanical brake being totally blocked. This system is actuated from the control panel, by means of a switch that opens the corresponding electrovalves causing the oil existing between the walls of the brake to empty out.

The motor reduction units include manual mechanical deblocking devices, normally materialized by a screw. When the machine breaks down, it may thus be towed since on the contrary the moving of the dumper would necessarily have to be done by lifting the wheels.

In order to provide a better understanding of the characteristics of the invention and forming an integral part of this specification, some drawings, in whose figures the following has been represented in an illustrative and non-restrictive manner, are attached hereto:

### BRIEF DESCRIPTION OF THE DRAWINGS

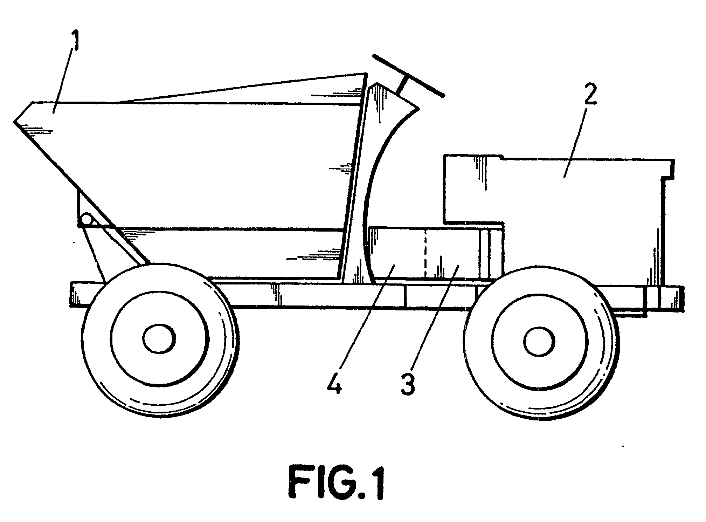

Figure 1 is a longitudinal raised view of a dumper that includes the hydrostatic propulsion system object of the invention.
Figure 2 is a schematic view of the hydraulic and control circuit of the hydrostatic propulsion system, according to the invention.
Figure 3 is a longitudinal raised schematic view of a motor reduction unit that includes the manual deblocking screw.

### DESCRIPTION OF THE PREFERRED EMBODIMENT

Making reference to the numbering used in the figures we can see how the hydrostatic propulsion system for dumpers and the like, that the invention proposes, is applied to a dumper with the hopper (1) in the front part. The main gasoline or diesel engine occupies a rear position and has reference number (2) and the tandem connected hydraulic pumps (3) and (4) are connected to the power supply of the engine so that they rotate in unison.

The pumps draw in the hydraulic oil of the tank (5) and send it to the respective front or rear motor reduction units. The pump (3) is connected to the rear motor reduction units (6) and (7) and the pump (4) is connected to the front motor reduction units (8) and (9). Hence, the same flow reaches the two motor reduction units of a same front or rear axle.

The hydraulic pumps (3) and (4) are controlled by the pedal servocontrols (10) and (11), thus adjusting the flow sent to the motor reduction units (6), (7), (8) and (9), depending on the effort required. These servocontrols (10) and (11) actuate, one for forward motion and the other for reverse motion, when one pedal or the other is pressed.

The flow regulators are referred to as numbers (12) and (13) and are arranged in the connecting sections of the shunt connection of the independent hydraulic installation for the pump (3) and for the pump (4), thanks to which the pressure as well as the oil flow needed to compensate the greater or lesser effort of each wheel is balanced and as we have said above, these regulators function as a conventional differential set.

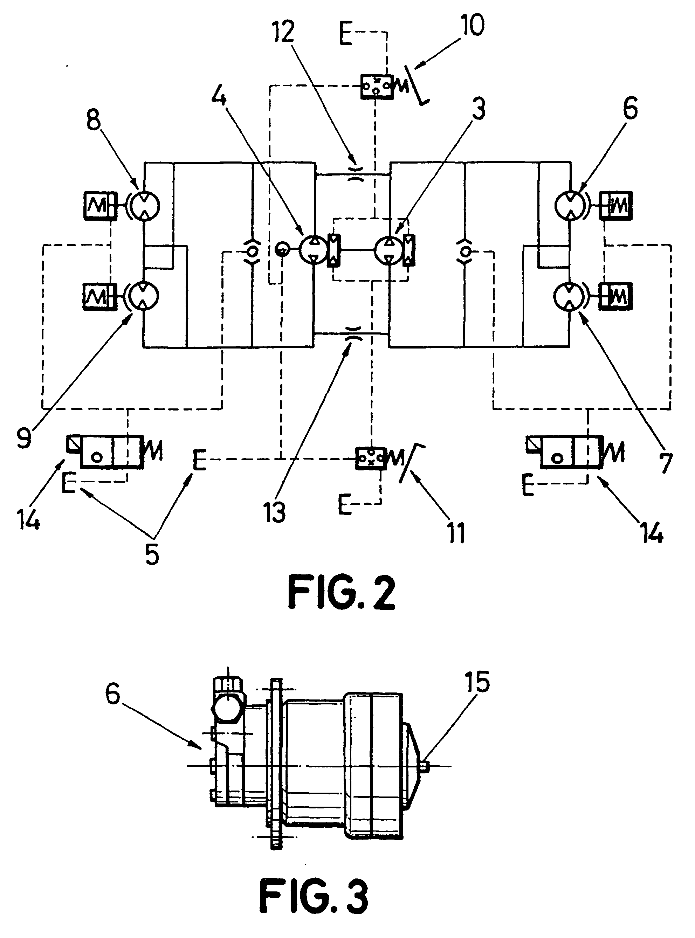

In figure 3 we can see one of these motor reduction units, such as number (6) and that has the proposed hydraulic braking system built in, when the pedal servocontrol (10) or (11) stops actuating.

By means of a switch that opens the electrovalves (14), the oil of the servobrakes is caused to empty out in order to activate the parking brake blocking the four wheels, by action of the strong mechanical spring that it has.

These motor reduction units (6), (7), (8) and (9) include the manual mechanical deblocking device, materialized in this case by the deblocking screw (15) (figure 3), in the event there is a breakdown.

## Claims

1. Hydrostatic propulsion system for dumpers and the like, by means of hydraulic pumps connected to a main engine selected from gasoline and diesel engines of a vehicle, and that has hydraulic motors in order to actuate the wheels of the vehicle, said hydrostatic propulsion system being provided with hydraulic motor reduction units (6, 7, 8 and 9) with a braking and parking device, connected to the respective wheel of the vehicle, belonging to a hydraulic circuit where two pumps (3, 4) are actuated by the main engine (2), connected to a power supply thereof and coupled together in tandem, turning in unison and sending flow to the hydraulic motor reduction units (6, 7, 8 and 9) of front and rear wheels, respectively and independently, **characterized in that** both hydraulic pumps (3, 4) are controlled by respective pedal servocontrols (10, 11) depending on an effort to be exerted and for forward motion and reverse motion, respectively, with a particularity that independent hydraulic circuits of each hydraulic pump (3, 4) are shunt connected by means of flow regulators (12, 13) in order to compensate a greater or lesser effort of each wheel, functioning as a conventional differential set.

2. Hydrostatic propulsion system for dumpers and the like, according to claim 1, **characterized in that** the motor reduction units (6, 7, 8 and 9) have a built-in hydraulic braking system, once the servocontrol (10, 11) stops actuating, when oil pressure drops, entering into operation a mechanical part actuated by strong springs connected thereto.

3. Hydrostatic propulsion system for dumpers and the like, according to claim 1, **characterized in that** there is a parking brake blocking the four wheels, emptying out the hydraulic oil that remains in the wheels, by means of a switch that opens corresponding electrovalves (14).

4. Hydrostatic propulsion system for dumpers and the like, according to claim 1, **characterized in that** the hydraulic motor reduction units (6, 7, 8 and 9) have some built-in manual mechanical deblocking devices, materialized by respective screws (15) in order to permit circulation of oil in the event of a breakdown and to allow towing.

## Patentansprüche

1. Hydrostatisches Antriebssystem für Dumper und dergleichen, das durch Hydraulikpumpen mit einem Hauptmotor verbunden ist, der aus Benzin- und Dieselmotoren eines Fahrzeugs ausgewählt wird, und das Hydraulikmotoren zum Betätigen der Räder des Fahrzeugs hat, wobei das hydrostatische Antriebssystem mit Hydraulikmotor-Reduktionseinheiten (6, 7, 8 und 9) mit einer Brems-und-Park-Vorrichtung versehen ist, die mit dem entsprechenden Rad des Fahrzeugs verbunden sind und zu einem Hydraulikkreis gehören, wobei zwei Pumpen (3, 4) durch den Hauptmotor (2) betätigt werden, die mit einer Energiezufuhr desselben verbunden und hintereinander gekoppelt sind, sich synchron drehen und Strom jeweils unabhängig zu den Hydraulikmotor-Reduktionseinheiten (6, 7, 8 und 9) von Vorder- bzw. Hinterrädern leiten, **dadurch gekennzeichnet, dass** beide Hydraulikpumpen (3, 4) in Abhängigkeit von einer auszuübenden Kraft zur Vorwärtsbewegung bzw. Rückwärtsbewegung durch entsprechende Pedal-Servosteuereinrichtungen (10, 11) gesteuert werden, wobei eine Besonderheit darin besteht, dass unabhängige Hydraulikkreise jeder Hydraulikpumpe (3, 4) durch Durchflussregler (12, 13) parallel verbunden sind, um eine größere oder geringere Kraft jedes Rades auszugleichen, so dass sie wie eine herkömmliche Differenzialgruppe wirken.

2. Hydrostatisches Antriebssystem für Dumper und dergleichen nach Anspruch 1, **dadurch gekennzeichnet, dass** die Reduktionseinheiten (6, 7, 8 und 9) ein eingebautes hydraulisches Bremssystem haben, das, wenn die Funktion der Servosteuereinrichtung (10, 11) nicht mehr wirksam ist, wenn der Öldruck abfällt, ein mechanisches Teil in Funktion setzt, das durch starke Federn betätigt wird, die damit verbunden sind.

3. Hydrostatisches Antriebssystem für Dumper und dergleichen nach Anspruch 1, **dadurch gekennzeichnet, dass** eine Parkbremse vorhanden ist, die die vier Räder blockiert und das Hydrauliköl, das in den Rädern verblieben ist, mittels eines Schalters, der entsprechende Elektroventile (14) öffnet, ablässt.

4. Hydrostatisches Antriebssystem für Dumper und dergleichen nach Anspruch 1, **dadurch gekennzeichnet, dass** die Hydraulikmotor-Reduktionseinheiten (6, 7, 8 und 9) eingebaute manuelle mechanische Entblockiervorrichtungen haben, die durch entsprechende Schrauben (15) gebildet werden, um Zirkulation von Öl bei einer Störung zuzulassen und Abschleppen zu ermöglichen.

## Revendications

1. Système de propulsion hydrostatique pour basculeurs et analogues, comportant des pompes hydrauliques raccordées à un moteur principal choisi parmi les moteurs à essence et diesel de véhicule, et qui possède des moteurs hydrauliques destinés à actionner les roues du véhicule, le système de propulsion hydrostatique comprenant des unités (6, 7, 8 et 9) de réduction pour moteur hydraulique munies d'un dispositif de freinage et de stationnement, raccordées à la roue respective du véhicule, appartenant à un circuit hydraulique dans lequel deux pompes (3, 4) sont entraînées par le moteur principal (2), raccordées à une alimentation de celui-ci et couplées ensemble en tandem, tournant à l'unisson et transmettant un courant aux unités (6, 7, 8 et 9) de réduction pour moteur hydraulique des roues avant et arrière respectivement et indépendamment, **caractérisé en ce que** les deux pompes hydrauliques (3, 4) sont commandées par des servocommandes respectives (10, 11) à pédale suivant un effort à exercer et pour un déplacement en marche avant et un déplacement en marche arrière respectivement, avec une particularité selon laquelle des circuits hydrauliques indépendants de chaque pompe hydraulique (3, 4) sont raccordés en shunt par des régulateurs de débit (12, 13) afin qu'un effort plus ou moins grand sur chaque roue soit compensé, avec un fonctionnement analogue à celui d'un ensemble différentiel classique.

2. Système de propulsion hydrostatique pour basculeurs et analogues selon la revendication 1, **caractérisé en ce que** les unités (6, 7, 8 et 9) de réduction pour moteur ont un système incorporé de freinage hydraulique, lorsque la servocommande (10, 11) interrompt l'actionnement, et lorsque la pression hydraulique chute, par passage en fonctionnement d'une pièce mécanique manoeuvrée par de puissants ressorts qui lui sont raccordés.

3. Système de propulsion hydrostatique pour basculeurs et analogues selon la revendication 1, **caractérisé en ce qu'**il existe un frein de stationnement bloquant les quatre roues, vidant le fluide hydraulique qui reste dans les roues, à l'aide d'un commutateur qui ouvre des électrovannes correspondantes (14).

4. Système de propulsion hydrostatique pour basculeurs et analogues selon la revendication 1, **caractérisé en ce que** les unités (6, 7, 8 et 9) de réduction pour moteur hydraulique ont des dispositifs manuels incorporés de déblocage mécanique, matérialisés par des vis respectives (15) destinées à permettre une circulation du fluide hydraulique en cas de panne et à permettre le remorquage.
